(19) Europäisches Patentamt / European Patent Office / Office européen des brevets

(11) **EP 2 609 127 B1**

(12) **EUROPEAN PATENT SPECIFICATION**

(45) Date of publication and mention
of the grant of the patent:
**21.03.2018 Bulletin 2018/12**

(51) Int Cl.:
*C08F 210/16* (2006.01)    *C08F 4/649* (2006.01)
*C08F 4/654* (2006.01)    *C08J 5/18* (2006.01)

(21) Application number: **11758289.0**

(22) Date of filing: **17.08.2011**

(86) International application number:
**PCT/US2011/048128**

(87) International publication number:
**WO 2012/027173 (01.03.2012 Gazette 2012/09)**

(54) **PREPARATION OF LLDPE HAVING CONTROLLED XYLENE SOLUBLES OR HEXANE EXTRACTABLES**

HERSTELLUNG VON LLDPE MIT KONTROLLIERTEN XYLENLÖSERN ODER HEXAN-EXTRACTABLES

PRÉPARATION DE LLDPE AYANT UNE TENEUR CONTRÔLÉE EN SOLUBLES DANS LE XYLÈNE OU EXTRACTIBLES PAR L'HEXANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2010 US 806894**

(43) Date of publication of application:
**03.07.2013 Bulletin 2013/27**

(73) Proprietor: **Equistar Chemicals, LP**
**Houston, TX 77010 (US)**

(72) Inventors:
• **MAVRIDIS, Harilaos**
**Lebanon**
**Ohio 45036 (US)**
• **BERAN, Debra L.**
**Cincinnati**
**Ohio 45241 (US)**
• **GOLDEN, Jeffrey R.**
**Pearland**
**Texas 77584 (US)**
• **PATER, Joachim T., M.**
**I-44020 Ferrara (IT)**
• **MORINI, Giampiero**
**I-35100 Padova (IT)**

(74) Representative: **Sacco, Marco et al**
**Equistar Chemicals, LP IP**
**Basell Poliolefine Italia S.r.l.**
**Intellectual Property**
**P.le Privato G. Donegani, 12**
**Casella Postale 19**
**44122 Ferrara (IT)**

(56) References cited:
**EP-A1- 1 652 863**    **EP-A2- 0 231 102**
**WO-A1-00/52066**

• **Cechini, Morini, Piemontesi: "Ziegler Natta Catalysts" In: "Encyclopedia of Chemical Technology", 1 January 1992 (1992-01-01), John Wiley & Sons, XP009153822, vol. 26, pages 502-554, page 506, line 14 - line 19**

**Description**

FIELD OF THE INVENTION

The invention relates to a linear low density polyethylene. More particularly, the invention relates to a method for producing linear low density polyethylene grades having controlled xylene solubles or hexane extractables.

BACKGROUND OF THE INVENTION

Polyethylene is divided into high density (HDPE, density 0.941 g/cm$^3$ or greater), medium density (MDPE, density from 0.926 to 0.940 g/cm$^3$), low density (LDPE, density from 0.910 to 0.925 g/cm$^3$) and linear low density polyethylene (LLDPE, density from 0.910 to 0.925 g/cm$^3$). See ASTM D4976-98: Standard Specification for Polyethylene Plastic Molding and Extrusion Materials. Linear polyethylene, including HDPE, MDPE, and LLDPE, is generally made by coordination catalysts such as Ziegler-Natta and single-site catalysts, while branched polyethylene, LDPE, is made by free radical polymerization at high pressure. For linear polyethylene, the density varies with the quantity of $\alpha$-olefin comonomers used with ethylene. The comonomer forms short-chain branches along the ethylene backbone. Since branches create separation between the ethylene units, the greater the quantity of comonomer, the lower the density of the polymer. Typical comonomer content of LLDPE is from 5 to 10%.

Ziegler-Natta catalysts for making LLDPE are known. Commonly used Ziegler-Natta catalysts include TiCl$_3$, TiCl$_4$, VCl$_3$, and VCl$_4$. The catalysts are often used with organoaluminum co-catalysts such as trialkyl aluminum compounds and alkylaluminum halides. Optionally, the catalysts are used with electron donors such as alcohol, ethers, and esters. Electron donors are often utilized to control the molecular weight distribution of the LLDPE and to increase the catalyst activity.

The main LLDPE use is in film applications, including produce bags, garbage bags, stretch wrap, shopping bags, industrial liners, clarity films such as bread bags, and collation shrink films. One important property of LLDPE films is the film blocking. Blocking is the tendency of LLDPE films to adhere to one another as they are separated. For general-purpose films, blocking is undesirable, while for stretch cling films, high blocking is required. Film blocking directly relates to the xylene solubles or hexane extractables of LLDPE. In general, the higher xylene soluble or hexane extractable content, the higher the block of the LLDPE film.

One challenge facing the industry is controlling the xylene solubles or hexane extractables of LLDPE so that various LLDPE grades can be made to meet different application requirements. More particularly, it is of significant industrial importance to develop new methods which provide LLDPE grades having desired xylene solubles or hexane extractables by using the same catalyst but varying the electron donor concentration.

BRIEF DESCRIPTION OF THE DRAWINGS

Each of Figs 1-6 uses data from the examples of Table 1.

Fig. 1 shows the normalized xylene solubles dependence on the Al/THF molar ratio and the least-squares fit of the data to a power-law relation.

Fig. 2 shows the hexane extractables dependence on the Al/THF molar ratio and the least-squares fit of the data to a power-law relation.

Fig. 3 shows the film blocking dependence on the Al/THF molar ratio and the least-squares fit of the data to a power-law relation.

Fig. 4 shows the dependence of the percent change in normalized xylene solubles to the percent change in the Al/THF molar ratio and a linear fit of the data.

Fig. 5 shows the dependence of the percent change in hexane extractables to the percent change in the Al/THF molar ratio and a linear fit of the data.

Fig. 6 shows the dependence of the percent change in film blocking to the percent change in the Al/THF molar ratio and a linear fit of the data.

SUMMARY OF THE INVENTION

The invention provides a method for making LLDPE grades having different xylene solubles or hexane extractables with the same Ziegler-Natta catalyst by varying the alkylaluminum/electron donor ratio used for polymerization. The method comprises copolymerizing ethylene with a $C_{3-10}$ $\alpha$-olefin in the presence of a Ziegler-Natta catalyst, an alkylaluminum, and an electron donor; determining the dependency of the xylene solubles or hexane extractables on the alkylaluminum/electron donor ratio; and adjusting the alkylaluminum/electron donor ratio to achieve a desired xylene solubles or hexane extractables.

DETAILED DESCRIPTION OF THE INVENTION

The method of the invention comprises copolymerizing ethylene with a $C_{3-10}$ $\alpha$-olefin in the presence of a Ziegler-Natta catalyst, an alkylaluminum, and an electron donor.

Ziegler-Natta catalysts suitable for use in the method of the invention include those known to the polyolefin industry. The Ziegler-Natta catalyst is $TiCl_4$. Preferably, the catalyst is used in an amount within the range of 5,000 to 50,000 g, more preferably from 10,000 to 25,000 g, of polymer per g of the catalyst.

The Ziegler-Natta catalyst supported on magnesium chloride. The alkylaluminium is triethylaluminium Preferably, the alkylaluminum is used in an amount within the range of 75 to 500 ppm, more preferably from 100 to 300 ppm, and most preferably from 150 to 250 ppm, based on the weight of ethylene feed of polymerization. The electron donor is tetrahydrofuran (THF). Preferably, the electron donor is used in an amount within the range of 10 to 50 wt%, more preferably from 20 to 40 wt%, and most preferably from 25 to 35 wt%, of the catalyst. According to the invention, $TiCl_4$ is mixed with $MgCl_2$ in the presence of an inert solvent to obtain an intermediate product. The intermediate product is isolated from the solvent. THF is then contacted with this intermediate product. The THF-treated product can then be washed with solvents to form a supported catalyst. The supported catalyst has an Mg/Ti molar ratio preferably greater than or equal to 7, more preferably within the range of 10 to 100, and most preferably within the range of 10 to 50. It has a molar ratio of the electron donor to the Ti(IV) compound preferably within the range of 0.5 to 20, more preferably within the range of 5 to 20, and most preferably within the range of 10 to 20. $MgCl_2$ used can be pre-formed or formed during the catalyst preparation. Particularly preferred is the use of $MgCl_2$ in an active form. Using an active form of $MgCl_2$ to support Ziegler-Natta catalysts is known. See, for example, U.S. Pat. Nos. 4,298,718 and 4,495,338. The teachings of these patents are incorporated herein by reference.

One particularly preferred supported catalyst is disclosed in co-pending application docket no. FE2265 (US), filed on August 24, 2010. The teachings of the supported catalyst and its preparation of the co-pending application are incorporated herein by reference. The supported catalyst is preferably characterized by an X-ray diffraction spectrum, in which, in the range of $2\theta$ diffraction angles between 5.0° and 20.0°, at least three main diffraction peaks are present at diffraction angles $2\theta$ of 7.2 $\pm$ 0.2°, and 11.5 $\pm$ 0.2°, and 14.5 $\pm$ 0.2° said peak at $2\theta$ of 7.2 $\pm$ 0.2° being the most intense one and the peak at 11.5 $\pm$ 0.2° having an intensity less than 90% of the intensity of the most intense peak.

Suitable $C_{3-10}$ $\alpha$-olefins include propylene, 1-butene, 1-hexene, and 1-octene, the like, and mixtures thereof. Preferably, the $\alpha$-olefin is 1-butene, 1-hexene, or mixtures thereof. The amount of $\alpha$-olefin used depends on the density of LLDPE desired. Preferably, the $\alpha$-olefin is used in an amount within the range of 5 to 10 wt% of ethylene. The density of LLDPE is preferably within the range of 0.865 to 0.940 g/cm$^3$, more preferably within the range of 0.910 to 0.940 g/cm$^3$, and most preferably within the range of 0.915 to 0.935 g/cm$^3$.

Preferably, the copolymerization of ethylene with $\alpha$-olefin is performed in gas phase. Gas phase polymerization is known. See U.S. Pat. No. 5,733,978. The teachings of the '978 patent is incorporated herein by reference. In one embodiment, the process is performed in a single gas phase reactor. The catalyst is continuously fed to the reactor, either directly, or through one or more pre-activation devices. The gas phase preferably comprises ethylene, one or more $\alpha$-olefin comonomers, hydrogen, and propane. Monomers and other components are continuously fed into the reactor to maintain the reactor pressure and gas phase composition essentially constant. A product stream is continuously withdrawn from the reactor. The LLDPE is isolated from the product stream and the unreacted monomers and other components are recycled. A fluidization compressor is often used to circulate the gas contained in the reactor, at such a recirculation velocity that the polymeric bed is maintained in the fluidized state.

In another embodiment, the process is performed in two gas phase reactors in series. The catalyst is continuously fed to the first reactor, either directly, or through one or more pre-activation devices. The gas phase of the first reactor preferably comprises ethylene, one or more $\alpha$-olefin comonomers, hydrogen, and propane. Monomers and other components are continuously fed to the first reactor to maintain the reactors pressure and gas phase composition essentially constant. A product stream is withdrawn from the first gas phase reactor and fed to the second. The gas phase in the second reactor preferably differs from the first reactor so that the LLDPE made in the second reactor differs from the LLDPE made in the first reactor in either composition or molecular weight, or both. The end-product stream, which comprises the LLDPE made from the first and the second reactors, is withdrawn from the second reactor.

Hydrogen is preferably used to control the molecular weight of the LLDPE. Molecular weight can be measured by melt index $MI_2$. Lower $MI_2$ means higher molecular weight. The LLDPE preferably has a melt index $MI_2$ within the range of 0.1 to 10 dg/min, and more preferably within the range of 0.5 to 8 dg/min. A particularly preferred LLDPE resin is a copolymer of ethylene and 1-butene having 1-butene content within the range of 5 to 10 wt%. The ethylene-1-butene copolymer preferably has a density from 0.912 to 0.925 g/cm³ and, more preferably, from 0.915 to 0.920 g/cm³. The ethylene-1-butene copolymer preferably has an $MI_2$ within the range of 0.5 to 15 dg/min and, more preferably, from 1 to 10 dg/min. Densities and $MI_2$ are determined in accordance with ASTM D1505 and D1238 (condition 190/2.16), respectively.

Preferably, the copolymerization is preformed at a temperature within the range of 70°C to 110°C, more preferably from 80°C to 100°C, and most preferably within the range of 80°C to 95°C. It is preferably performed at a pressure within the range of 150 to about 500 psi, more preferably from about 200 to about 400 psi, and most preferably from about 250 to about 350 psi.

The method of the invention comprises determining the dependency of the xylene solubles or hexane extractables of the LLDPE on the alkylaluminum/electron donor used for the copolymerization of ethylene and α-olefin. The xylene soluble or hexane extractable contents are measured for LLDPE samples made at a variety of alkylaluminum/electron donor ratios. The electron/alkylaluminum ratio can be varied by keeping the electron donor concentration constant and varying the alkylaluminum concentration. Alternatively, the alkylaluminum/electron donor ratio can be varied by keeping the alkylaluminum concentration constant and varying the electron donor concentration. Furthermore, the alkylaluminum/electron donor ratio can be varied by changing the concentrations of both the electron donor and the alkylaluminum. Preferably, the dependency of the xylene solubles or hexane extractables on the alkylaluminum/electron donor ratio is determined while other reaction parameters such as temperature, pressure, comonomer type and concentration are kept essentially constant.

The xylene solubles are measured by the following procedure. Two grams of LLDPE sample is placed in 200 ml of o-xylene. The solution is refluxed and stirred until the sample is fully dissolved. The solution is then cooled to 25°C in a water-bath for 30 minutes for the polymer to precipitate. The solution is filtered and dried. The xylene solubles are calculated by dividing the weight of the dried sample by the total weight of the LLDPE sample.

It is understood by those skilled in the art that the xylene solubles are influenced by melt index and density, in addition to molecular weight distribution and comonomer distribution. It would be useful to normalize the effects of melt index ($MI_2$) and density in a way that would allow standard comparison of resins that may differ slightly in melt index and density. To that effect, we employ the "normalized % xylene solubles," defined below which attempts to shift, or normalize, the % xylene solubles of a resin with a given $MI_2$ and density to the standard conditions of 1.0 dg/min MI and 0.9180 g/cm³ density. The normalization is performed as follows:

$$\text{normalized \% xylene solubles} = \text{\% xylene solubles} + 1300 * (\rho'_B - 0.918)$$

$$\rho'_B = \rho_B - 0.0024 * \ln(MI_2)$$

$\rho_B$ = base resin density, in grams per cubic centimeter.

$\ln(MI_2)$ = natural logarithm of $MI_2$.

$MI_2$ = melt index per ASTM D1238 at 190°C and 2.16 kg.

Base resin density is the resin density, measured according to ASTM D1505 and the density specimens are prepared with the annealed extrudate method (melt index strand annealed in boiling water for 30 minutes and then cooled under ambient conditions for 20 minutes, prior to the density measurement). The "base resin density" is understood to be the resin density without additives, such as antiblock additives that would change the density. The presence of such additives can be detected via the ash test (according to ASTM D5630). If the base resin density is not known, it can be estimated from the following relation:

$$\text{base resin density} = (\text{annealed extrudate density}) - (\text{ppm ash}) * 7E\text{-}7$$

The hexane extractable content is determined in accordance with 21 CFR 177.1520 (Option 2). A 2.5 g sample of film (of thickness less than or equal to 4 mils) is cut into square-inch sections and positioned in a perforated stainless steel extraction basket. The film is then extracted for 2 hours with one liter of n-hexane at 49.5°C +/- 0.5°C. After rinsing briefly with fresh n-hexane and vacuum drying for 2 hours at 80°C +/-0.5°C, the extractables content is determined from the weight loss of the resin.

Films for hexane extractables measurements are prepared using an OCS cast film line, equipped with a Collin extruder with a 25 mm screw (3:1 compression ratio single stage screw without mixing sections), 150 mm x 0.5 mm (5.9" x 19.7 mil) cast film die and an OCS Winder model CR-7 (3 to 10m/min line speed). The film thickness is 3.5 mils. Other film fabrication conditions: extruder barrel temperature zones at 190/210/200/200°C, die at 200°C, melt temperature at 190°C, screw RPM=50, line speed=3.5 m/min, chill roll temperature=18°C, and winder tension set=7.5.

Blown films are produced on a blown film line equipped with a 2" diameter smooth-bore extruder, 24:1 L/D barrier screw and a 4" diameter spiral mandrel die with a 0.100" die gap. Blown film fabrication conditions include an output rate of 63 lb/hr, melt temperature of 215-220°C, blow-up-ratio of 2.5, frostline height of 12", and film thickness of 1 mil (25 microns).

Film blocking is measured according to ASTM D3354. Specimens are conditioned prior to measurement for 24 hours at 60°C under a weight resulting in a contact pressure of 1 psi. The specimens are cut from the collapsed blown film bubble such that the contacting film surfaces are "inside-to-inside." "Inside" and "outside" here refers to the bubble surface. "Inside-to-inside" typically represents the maximum likelihood of blocking in blown film. All tested films are 1 mil (25 microns) thick and contained 5500 ppm neat, untreated talc as antiblock and 900 ppm slip (erucamide). It is understood by those skilled in the art that film blocking of a particular resin can be manipulated and adjusted over a wide range via the addition of the appropriate amount of antiblock, such as talc or silica. However, as more antiblock is added to the resin to reduce film blocking, other film properties suffer, especially clarity (NAS). Therefore, in order to compare meaningfully the film blocking tendency of various resins, the amount of antiblock should be fixed to a common value, which, in the present application, is set at 5500 ppm talc. Other properties of the film can also be measured. For instance the dart drop impact, elmendorf tear, haze and clarity (NAS or narrow-angle scattering) are measured according to ASTM methods D1709, D1922, D1003 and D1746, respectively.

The method of the invention comprises adjusting the alkylaluminum/electron donor ratio to achieve a desired xylene soluble or hexane extractable content. The advantage of the invention is that a variety of LLDPE grades having different xylene solubles can be made by using the same Ziegler-Natta catalyst but varying the ratio of alkylaluminum/electron donor. The method of the invention is also useful for a multi-reactor process where a different alkylaluminum/electron donor or ratio is used in different reactors. LLDPE resin components having different xylene solubles are thereby made and blended in the process to yield an LLDPE product having multiple components of different xylene soluble or hexane extractable contents.

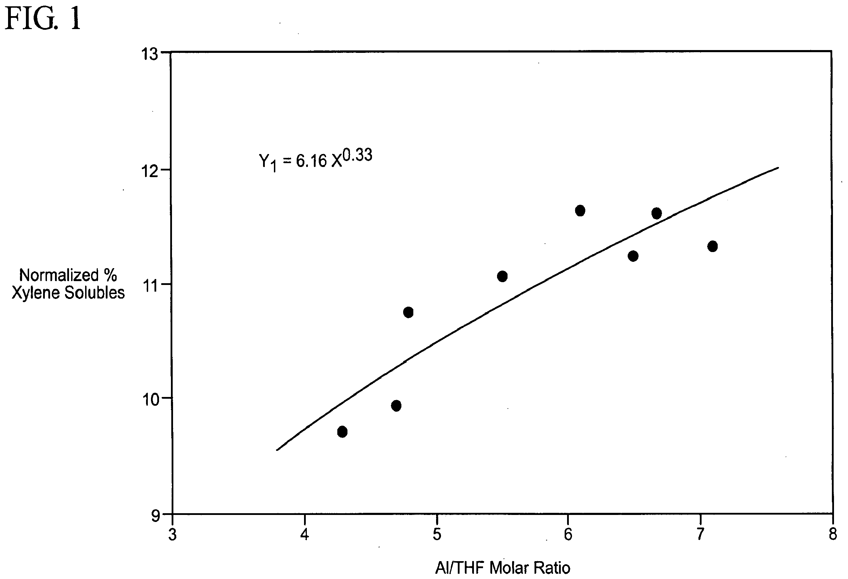

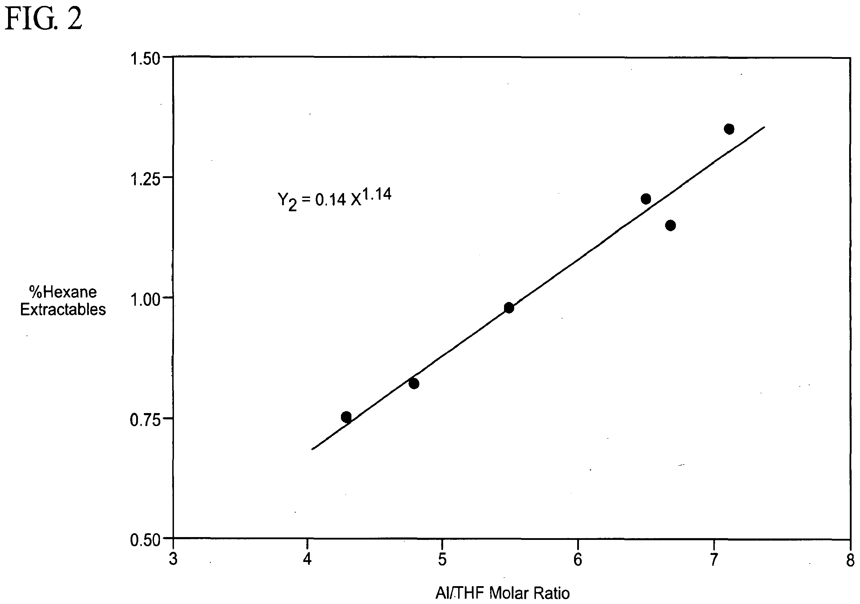

In an embodiment, the dependencies of the normalized xylene solubles, $Y_1$, and the hexane extractables, $Y_2$, on the alkylaluminum/electron donor, X, are given, respectively, by

$$Y_1 = 6.16X^{0.33}$$

$$Y_2 = 0.14X^{1.14}$$

wherein X is measured by molar ratio, and $Y_1$ and $Y_2$ are measured by wt%. These equations are determined by experiments using 1-butene as a comonomer. More details can be seen in the following examples and Fig. 1 and Fig. 2, respectively.

In another embodiment, the dependencies of the percent change in the normalized xylene solubles, $Z_1$, and the hexane extractables, $Z_2$, on the percent change of the alkylaluminum/electron donor, W, are given, respectively, by

$$Z_1 = 0.33W$$

$$Z_2 = 1.14W$$

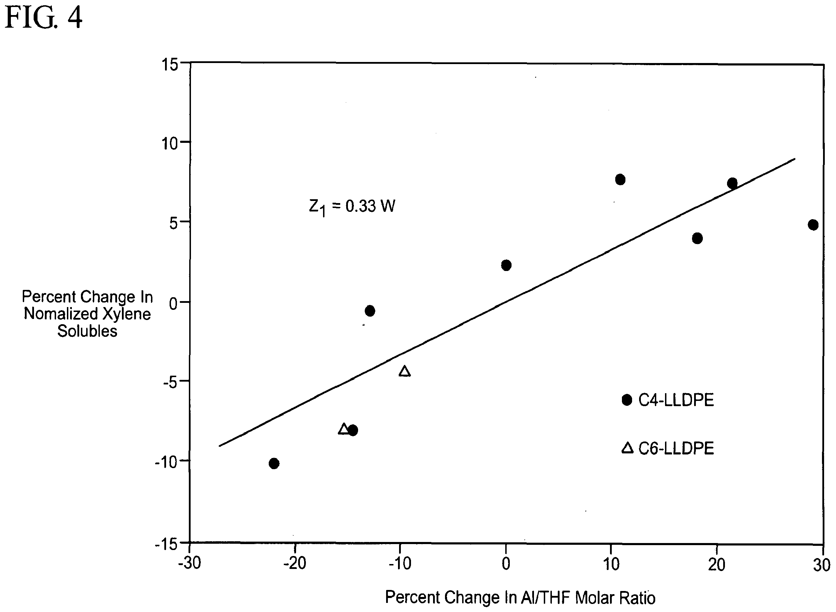

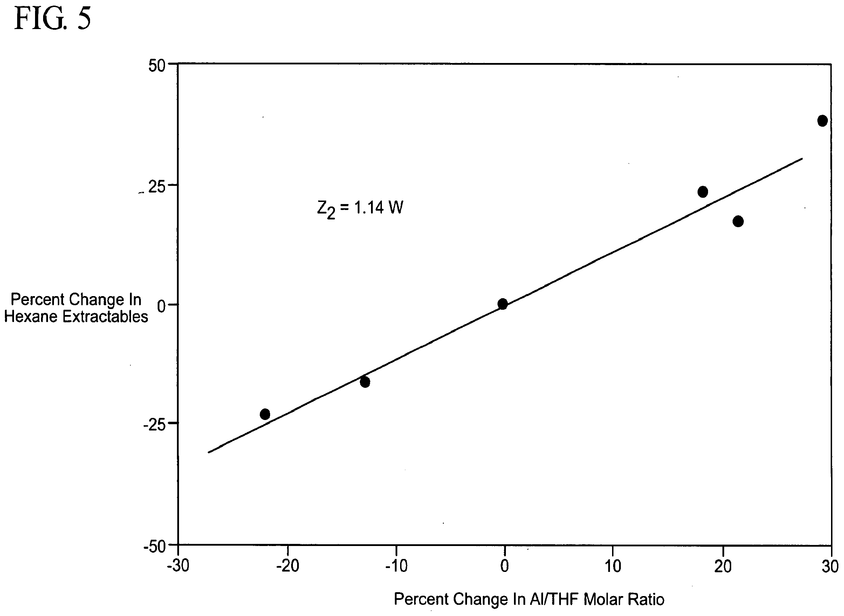

These equations are determined by experiments and more details can be seen in the following examples and Fig. 4 arid Fig. 5, respectively.

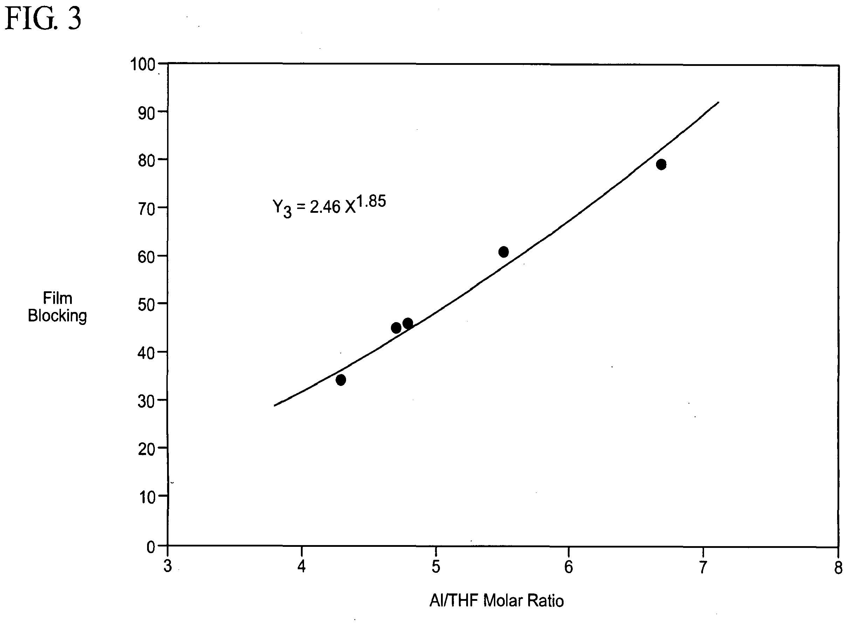

Xylene solubles and hexane extractables directly affect the properties of LLDPE films and other products made from LLDPE. For instance, the LLDPE film blocking property depends on its xylene solubles or hexane extractables. In general, the higher the xylene solubles or hexane extractables are, the higher the film blocking is. Blocking is the tendency for films to adhere to on another as they are separated. Low xylene solubles or hexane extractables, i.e., low blocking, is desirable for general-purpose films, while high xylene solubles or hexane extractables, i.e., high blocking, is desirable for stretch cling films. In one embodiment, the dependency of the LLDPE film blocking, $Y_3$, on the alkylaluminum/electron donor, X, given by

$$Y_3 = 2.46X^{1.85}$$

wherein X is the same as defined above and $Y_3$ is measured by g/16 in$^2$, I-to-I); 1-butene is used as a comonomer. More details can be seen in Fig. 3.

In another embodiment, the dependency of the percent change in LLDPE film blocking, $Z_3$, on the percent change of the alkylaluminum/electron donor, W, given by

$$Z_3 = 1.85W$$

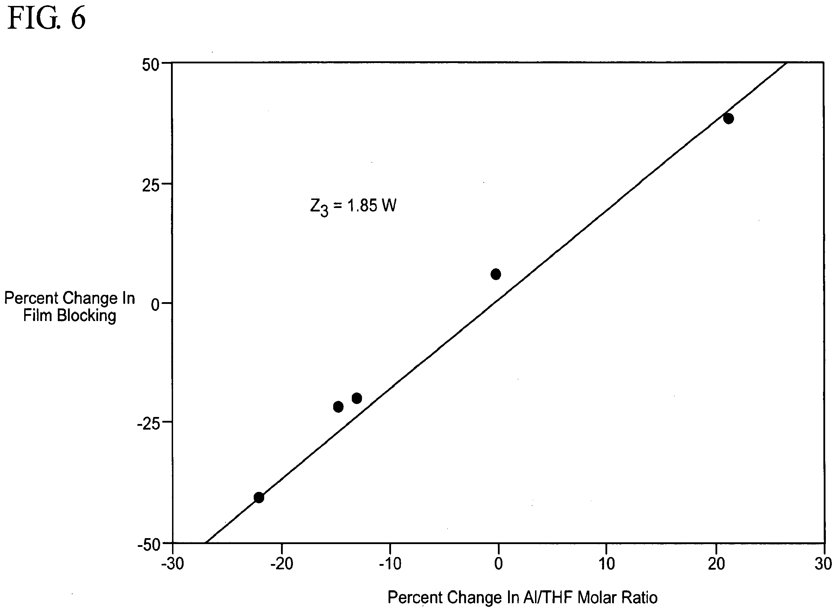

More details can be seen in Fig. 6.

The invention includes LLDPE resins made by the method of the invention and films comprising the LLDPE resins. Methods for making LLDPE films are known. For example, the blown film process can be used to produce biaxially oriented shrink films. In the process, LLDPE melt is fed by an extruder through a die gap (0.025 to 0.100 in) in an annular die to produce a molten tube that is pushed vertically upward. Pressurized air is fed to the interior of the tube to increase the tube diameter to give a "bubble." The volume of air injected into the tube controls the size of the tube or the resulting blow-up ratio, which is typically 1 to 3 times the die diameter. In low stalk extrusion, the tube is rapidly cooled by a cooling ring on the outside surface and optionally also on the inside surface of the film. The frost line height is defined as the point at which the molten extrudate solidifies. This occurs at a height of approximately 0.5-4 times the die diameter. The draw down from the die gap to the final film thickness and the expansion of the tube diameter result in the biaxial orientation of the film that gives the desired balance of film properties. The bubble is collapsed between a pair of nip rollers and wound onto a film roll by the film winder.

The following examples merely illustrate the invention. Those skilled in the art will recognize many variations that are within the spirit of the invention and scope of the claims.

## EXAMPLES

A Ziegler-Natta catalyst is prepared as follows.

An initial amount of microspheroidal $MgCl_2 \cdot 2.8\ C_2H_5OH$ is prepared according to the method described in Example 2 of WO98/44009 but operating on a larger scale. The stirring conditions during the preparation are adjusted to obtain the desired average particle size. The microspheroidal $MgCl_2$-EtOH adduct is subjected to a thermal treatment under nitrogen stream over a temperature range of 50-150°C, to reduce the alcohol content. The adduct contains 28.5 wt% of EtOH and has an average particle size of 23 microns.

A 500 mL four-necked round flask is purged with nitrogen, charged with 250 mL of $TiCl_4$ at 0°C, and then charged with 10 grams of the above-described adduct under stirring. The temperature is raised to 130°C and maintained at that temperature for 2 hours. The stirring is discontinued, the solid product is allowed to settle, and the supernatant liquid is siphoned off. An additional amount of $TiCl_4$ is added to the flask to reach the initial liquid volume. The temperature is maintained at 110°C for 1 hour. Again, the solid is allowed to settle, and the liquid is siphoned off. The solid is then washed three times with anhydrous hexane (100 mL at each washing) at 60°C and twice at 40°C. Finally, the solid intermediate component is dried under vacuum and analyzed. It contains 4.2 wt% of Ti and 20.5 wt% of Mg.

A 500 mL four-necked round flask equipped with a mechanical stirrer is purged with nitrogen and charged with 300 mL of anhydrous hexane and 21 g of the solid intermediate at room temperature. Under stirring THF is added dropwise in an amount to have a molar ratio Mg/THF=1.25. The temperature is raised to 50°C and the mixture is stirred for 2 hours. The stirring is discontinued and the solid product is allowed to settle and the supernatant liquid is siphoned off. The solid is washed twice with anhydrous hexane (100 mL each time) at 40°C, recovered, and dried under vacuum.

A 350 mL four-necked round flask is purged with nitrogen and charged with 280 mL of heptane and 19.8 g of the above solid at 25°C. Under stirring, the temperature is raised to 95°C in about 30 minutes and maintained for 2 hours. The temperature is then cooled to 80°C, and the stirring is discontinued. The solid product is allowed to settle for 30 minutes and the supernatant liquid is siphoned off.

The X-ray spectrum of the solid shows in the range of $2\theta$ diffraction angles between 5° and 20° one main diffraction line at diffraction angles $2\theta$ of 7.2° (100), 8.2° (40), 11.5° (60), side peak at 14.5° (15), and an additional side peak at 18° (25); the numbers in brackets represent the intensity $I/I_o$ with respect to the most intense line. The solid catalyst has 15.7% of Mg, 1.6% of Ti, 31.1% of THF, an Mg/THF ratio of 1.49, and an Mg/Ti ratio of 19.1.

An LLDPE (ethylene-1-butene copolymer for Examples 1 through 9 in Table 1 and ethylene-1-hexene copolymer for Examples 10 through 12) is made in a gas phase polymerization process. The process uses a single fluidized bed reactor equipped with a gas recirculation compressor. The gas phase of the reactor is recycled with such a velocity that the polymeric bed in the reactor is kept in fluidized conditions. For Examples 1 through 6 in Table 1, the gas phase comprises ethylene, 1-butene, hydrogen, nitrogen and isopentane. For Examples 7 through 9 in Table 1, the gas phase comprises ethylene, 1-butene, hydrogen, and propane. For Examples 10 through 12 in Table 1, the gas phase comprises ethylene, 1-hexene, hydrogen, and propane. The ethylene concentration is controlled to have a high polymerization rate while maintaining polymer morphology (fines formation, sheeting, chunks formation, etc.), and is kept at about 30 mol%. The 1-butene to ethylene ratio or 1-hexene to ethylene ratio respectively is controlled in such a way that the density of the formed polymer is on target. The hydrogen to ethylene ratio is controlled in such a way that the molecular weight or $MI_2$ of the formed polymer is on target.

The above-mentioned catalyst is fed continuously to a preactivation section, where the catalyst is contacted with trihexylaluminum and diethylaluminum chloride. From the preactivation section, the catalyst is continuously fed to said gas phase reactor. Apart from the preactivated catalyst, triethylaluminum is continuously fed to the polymerization reactor system. The total aluminum/THF molar ratio for each example is listed in Table 1. The pressure in the reactor is kept at about 21 barg, while the polymerization temperature in the reactor is controlled to be 86°C. The LLDPE polymer is withdrawn from the reactor bed and degassed.

The LLDPE has a nominal melt index $MI_2$ of 1.0 g/10 min measured according to ASTM D1238 and a nominal annealed extrudate density of 0.918 g/cm$^3$ measured according to ASTM D1505. All pelletized resins in the examples contain a typical LLDPE antioxidant package (400 ppm Irganox 1076, 1200 ppm TNPP or Irgafos 168 and 600ppm zinc stearate). Examples 1, 3-4 and 6-9 also contain 900 ppm slip (erucamide) and 5500 ppm talc antiblock.

Al/THF molar ratio: Percent change for the C$_4$-LLDPE examples is calculated from a reference value of 5.5, which is the approximate mid-point of the range from 4 to 7 covered in the examples. For C$_6$-LLDPE examples, the reference Al/THF value is 5.2, corresponding to Example 10.

Normalized % xylene solubles: Percent change for the C$_4$-LLDPE examples is calculated from a reference value of 10.8. The reference value of 10.8 is the fitted normalized %xylene solubles value in Figure 1 that corresponds to Al/THF=5.5. For C$_6$-LLDPE examples, the reference normalized % xylene solubles value is 19.3, corresponding to Example 10.

% Hexane extractables: Percent change for the C$_4$-LLDPE examples is calculated from a reference value of 0.98. The reference value of 0.98 is the fitted % hexane extractables value in Figure 2 that corresponds to Al/THF=5.5.

Film blocking: Percent change for the C$_4$-LLDPE examples is calculated from a reference value of 58. The reference value of 58 is the fitted film blocking value in Figure 3 that corresponds to Al/THF=5.5.

**Table 1**

| | | | | | | | | | | | | |
|---|---|---|---|---|---|---|---|---|---|---|---|---|
| | | | | | | **Summary of Examples** | | | | | | |
| | Example 1 | Example 2 | Example 3 | Example 4 | Example 5 | Example 6 | Example 7 | Example 8 | Example 9 | Example 10 | Example 11 | Example 12 |
| Melt Index (2,16 kg, 190°C) | 0.94 | 0.91 | 0.91 | 0.88 | 0.89 | 0.98 | 1.09 | 0.93 | 1.04 | 1.05 | 1.06 | 0.89 |
| Base resin density (g/cm$^3$) | 0.9188 | 0.9198 | 0.9193 | 0.9195 | 0.9188 | 0,9191 | 0.9184 | 0.9183 | 0.9183 | 0.9198 | 0.9195 | 0.9205 |
| Comonomer | Butene | Butene | Butene | Butene | Butene | Butene | Butene | Butene | Butene | Hexene | Hexene | Hexene |
| I21.6/I2,16 Ratio | 24.9 | 24,3 | 24.4 | 24.5 | 27.0 | 26.8 | 24.5 | 25.5 | 25.3 | 29.6 | 29.1 | 28.9 |
| Slip(ppm | 900 | No | 900 | 900 | No | 900 | 900 | 900 | 900 | No | No | No |
| Antiblock (talc, ppm) | 5500 | No | 5500 | 5500 | No | 5500 | 5500 | 5500 | 5500 | No | No | No |
| | | | | | | | | | | | | |
| Film Blocking (g) | 80 | N/A | 46 | 34 | N/A | N/A | 45 | 61 | N/A | N/A | N/A | N/A |
| Dart Drop Impact (g) | 95 | 90 | 94 | 91 | 95 | 86 | 106 | 112 | 103 | 137 | 137 | 132 |
| Elmendorf Tear, MD (g) | 94 | 106 | 100 | 97 | 100 | 95 | 123 | 109 | 119 | 331 | 326 | 363 |
| Elmendorf Tear, TD(g) | 375 | 386 | 373 | 357 | 395 | 385 | 356 | 358 | 367 | N/A | N/A | N/A |
| Haze(%) | 15.0 | 7.1 | 15.0 | 17.0 | 8.4 | 16.4 | 15.0 | 14.0 | 14.0 | 9.2 | 9.9 | 10.0 |
| Clarity (NAS, %) | 22 | 78 | 23 | 19 | 79 | 19 | 36 | 37 | 37 | 76 | 74 | 75 |
| | | | | | | | | | | | | |
| % Xylene Solubles | 10.4 | N/A | 8.7 | 7.3 | 9.9 | 9.8 | 9.7 | 10.4 | 11.4 | 17.1 | 16.7 | 14.1 |

EP 2 609 127 B1

(continued)

| | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| **Summary of Examples** | | | | | | | | | | | | |
| Normalized % Xylene Solubles | 11.6 | N/A | 10.7 | 9.7 | 11.2 | 11.3 | 9.9 | 11.1 | 11.6 | 19.3 | 18.4 | 17.7 |
| % Hexane Extractables | 1.15 | 0.98 | 0.82 | 0.75 | 1.21 | 1.36 | N/A | N/A | N/A | N/A | N/A | N/A |
| | | | | | | | | | | | | |
| Al/THF molar ratio | 6.7 | 5.5 | 4.8 | 4.3 | 6.5 | 7.1 | 4.7 | 5.5 | 6.1 | 5.2 | 4.7 | 4.4 |
| | | | | | | | | | | | | |
| Percent Change in: | | | | | | | | | | | | |
| Al/THF Molar Ratio | 21.5 | -0.2 | -12.9 | -22.0 | 18.2 | 29.1 | -14.5 | 0.0 | 10.9 | 0.0 | -9.6 | -15.4 |
| Normalized % Xylene Solubles | 7.5 | N/A | -0.6 | -10.2 | 4.0 | 4.9 | -8.2 | 2.3 | 7.7 | 0.0 | -4.4 | -8.0 |
| % Hexane Extractables | 17.9 | 0.3 | -16.4 | -23.3 | 23.8 | 38.9 | N/A | N/A | N/A | N/A | N/A | N/A |
| Film Blocking (g) | 38 | N/A | -20 | -41 | N/A | N/A | -22 | 6 | -100 | N/A | N/A | N/A |

**Claims**

1. A method for making linear low density polyethylene (LLDPE) grades having different xylene solubles or hexane extractables with the same Ziegler-Natta catalyst by varying the amount of an alkylaluminum used for polymerization, said method comprising:

   (a) copolymerizing ethylene with a $C_{3-10}$ $\alpha$-olefin in the presence of the Ziegler-Natta catalyst, alkylaluminum, and an electron donor;
   (b) determining the dependency of the xylene solubles or hexane extractables on the alkylaluminum/electron donor ratio; and
   (c) varying the alkylaluminum/electron donor ratio to achieve LLDPE grades having desired xylene solubles or hexane extractables.

   wherein the alkylaluminum Is triethylaluminum and the Ziegler-Natta catalyst is supported on MgCl2, and wherein the Ziegler-Natta catalyst is obtained with the following process:

   $TiCl_4$ is mixed with $MgCl_2$ in the presence of an inert solvent to obtain an intermediate product; the intermediate product is isolated from the solvent; tetrahydrofuran, THF, is then contacted with this intermediate product; the tetrahydrofuran, THF, treated product can then be washed with solvents to form a supported catalyst; the supported catalyst has an Mg/Ti molar ratio within the range of 10 to 50 and a molar ratio THF/to the Ti(IV) compound within the range of 10 to 20.

2. The method of claim 1, wherein the dependency of the normalized xylene solubles, $Y_1$ (wt %) of the LLDPE on the alkylaluminum/electron donor, X (molar ratio), is given by the following equation:

$$Y_1 = 6.16X^{0.33}$$

   and wherein the $\alpha$-olefin is 1-butene.

3. The method of claim 1, wherein the dependency of the percent change in normalized xylene solubles, $Z_1$, of the LLDPE on the percent change of the alkylaluminum/electron donor, W, is given by the following equation:

$$Z_1 = 0.33W \ .$$

4. The method of claim 1, wherein the dependency of the hexane extractables, $Y_2$ (wt %), of the LLDPE on the alkylaluminum/electron donor, X (molar ratio), is given by the following equation:

$$Y_2 = 0.14X^{1.14}$$

   and wherein the $\alpha$-olefin is 1-butene.

5. The method of claim 1, wherein the dependency of the percent change in hexane extractables, $Z_2$, of the LLDPE on the percent change of the alkylaluminum/electron donor, W, is given by the following equation:

$$Z_2 = 1.14W \ .$$

**Patentansprüche**

1. Verfahren zum Herstellen von Sorten von linearem Polyethylen mit niedriger Dichte (LLDPE), die unterschiedliche Gehalte an xylollöslichen Materialien oder hexanextrahierbaren Materialien aufweisen, mit demselben Ziegler-Natta-Katalysator, indem die Menge an Alkylaluminium variiert wird, die zur Polymerisation verwendet wird, wobei das Verfahren umfasst:

(a) Copolymerisieren von Ethylen mit einem $C_{3-10}$-$\alpha$-Olefin in Gegenwart von dem Ziegler-Natta-Katalysator, Alkylaluminium und einem Elektronendonor;

(b) Bestimmen der Abhängigkeit des Gehalts an xylollöslichen Materialien oder hexanextrahierbaren Materialien von dem Verhältnis von Alkylaluminium/Elektronendonor; und

(c) Variieren des Verhältnisses von Alkylaluminium/Elektronendonor, um LLDPE-Sorten mit gewünschten Gehalten an xylollöslichen Materialien oder hexanextrahierbaren Materialien zu erreichen,

wobei das Alkylaluminium Triethylaluminium ist und der Ziegler-Natta-Katalysator auf $MgCl_2$ geträgert ist, und wobei der Ziegler-Natta-Katalysator nach dem folgenden Verfahren erhalten wird:

$TiCl_4$ wird mit $MgCl_2$ in Gegenwart eines inerten Lösungsmittels gemischt, um ein Zwischenprodukt zu erhalten; das Zwischenprodukt wird aus dem Lösungsmittel isoliert; Tetrahydrofuran, THF, wird dann mit diesem Zwischenprodukt in Kontakt gebracht; das mit Tetrahydrofuran, THF, behandelte Produkt kann dann mit Lösungsmitteln gewaschen werden, um einen geträgerten Katalysator zu bilden;

wobei der geträgerte Katalysator ein Molverhältnis von Mg/Ti im Bereich von 10 bis 50 und ein Molverhältnis von THF zu der Ti(IV)-Verbindung innerhalb des Bereichs von 10 bis 20 aufweist.

2. Verfahren nach Anspruch 1, wobei die Abhängigkeit des normalisierten Gehalts an xylollöslichem Material, $Y_1$ (Gew.%) des LLDPEs von Alkylaluminium/Elektronendonor, X (Molverhältnis), durch die folgende Gleichung gegeben ist:

$$Y_1 = 6,16X^{0,33}$$

und wobei das $\alpha$-Olefin 1-Buten ist.

3. Verfahren nach Anspruch 1, wobei die Abhängigkeit der prozentualen Änderung des normalisierten Gehalts an xylollöslichem Material, $Z_1$, des LLDPEs von der prozentualen Änderung von Alkylaluminium/Elektronendonor, W, durch die folgende Gleichung gegeben ist:

$$Z_1 = 0,33W.$$

4. Verfahren nach Anspruch 1, wobei die Abhängigkeit des Gehalts an hexanextrahierbarem Material, $Y_2$ (Gew.%) des LLDPEs von Alkylaluminium/Elektronendonor, X (Molverhältnis), durch die folgende Gleichung gegeben ist:

$$Y_2 = 0,14X^{1,14}$$

und wobei das $\alpha$-Olefin 1-Buten ist.

5. Verfahren nach Anspruch 1, wobei die Abhängigkeit der prozentualen Änderung des Gehalts an hexanextrahierbarem Material, $Z_2$, des LLDPEs von der prozentualen Änderung von Alkylaluminium/Elektronen, W, durch die folgende Gleichung gegeben ist:

$$Z_2 = 1,14W.$$

**Revendications**

1. Procédé de fabrication de grades de polyéthylène linéaire à basse densité (LLDPE) ayant différentes fractions solubles dans le xylène ou fractions extractibles dans l'hexane avec le même catalyseur de Ziegler-Natta en faisant varier la quantité d'un alkylaluminium utilisé pour la polymérisation, ledit procédé comprenant :

(a) la copolymérisation d'éthylène avec une α-oléfine en $C_{3 \text{ à } 10}$ en présence du catalyseur de Ziegler-Natta, de l'alkylaluminium et d'un donneur d'électrons ;

(b) la détermination de la dépendance des fractions solubles dans le xylène ou des fractions extractibles dans l'hexane sur le rapport alkylaluminium/donneur d'électrons ; et

(c) la variation du rapport alkylaluminium/donneur d'électrons pour obtenir des grades de LLDPE ayant les fractions solubles dans le xylène ou fractions extractibles dans l'hexane, souhaitées,

dans lequel l'alkylaluminium est le triéthylaluminium et le catalyseur de Ziegler-Natta est supporté sur $MgCl_2$, et dans lequel le catalyseur de Ziegler-Natta est obtenu avec le processus suivant :

du $TiCl_4$ est mélangé à du $MgCl_2$ en présence d'un solvant inerte de façon à obtenir un produit intermédiaire ; le produit intermédiaire est isolé du solvant ; du tétrahydrofurane, THF, est ensuite mis en contact avec ce produit intermédiaire ; le produit traité au tétrahydrofurane, THF, peut ensuite être lavé avec des solvants pour former un catalyseur supporté ; le catalyseur supporté a un rapport molaire Mg/Ti dans la plage de 10 à 50 et un rapport molaire du THF/au composé de Ti(IV) dans la plage de 10 à 20.

2. Procédé selon la revendication 1, dans lequel la dépendance des fractions solubles dans le xylène normalisées, $Y_1$ (% en poids) du LLDPE sur le rapport alkylaluminium/donneur d'électrons, X (rapport molaire), est donnée par l'équation suivante :

$$Y_1 = 6,16X^{0,33}$$

et dans lequel l'α-oléfine est le 1-butène.

3. Procédé selon la revendication 1, dans lequel la dépendance du changement en pour cent dans les fractions solubles dans le xylène normalisées, $Z_1$, du LLDPE sur le changement en pour cent du rapport alkylaluminium/donneur d'électrons, W, est donnée par l'équation suivante :

$$Z_1 = 0,33W.$$

4. Procédé selon la revendication 1, dans lequel la dépendance des fractions extractibles dans l'hexane, $Y_2$ (% en poids), du LLDPE sur le rapport alkylaluminium/donneur d'électrons, X (rapport molaire), est donnée par l'équation suivante :

$$Y_2 = 0,14X^{1,14}$$

et dans lequel l'α-oléfine est le 1-butène.

5. Procédé selon la revendication 1, dans lequel la dépendance du changement en pour cent dans les fractions extractibles dans l'hexane, $Z_2$, du LLDPE sur le changement en pour cent du rapport alkylaluminium/donneur d'électrons, W, est donnée par l'équation suivante :

$$Z_2 = 1,14W$$

FIG. 1

FIG. 2

$Y_2 = 0.14\, X^{1.14}$

%Hexane Extractables

Al/THF Molar Ratio

FIG. 3

$$Y_3 = 2.46 \, X^{1.85}$$

Film Blocking

Al/THF Molar Ratio

EP 2 609 127 B1

FIG. 4

Percent Change In Nomalized Xylene Solubles

$Z_1 = 0.33\ W$

● C4-LLDPE

△ C6-LLDPE

Percent Change In Al/THF Molar Ratio

EP 2 609 127 B1

FIG. 5

FIG. 6

$Z_3 = 1.85\, W$

Percent Change In Film Blocking

Percent Change In Al/THF Molar Ratio

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4298718 A
- US 4495338 A
- US 5733978 A
- WO 9844009 A